(19) Europäisches Patentamt
European Patent Office
Office européen des brevets

(11) EP 1 154 070 A1

(12) **EUROPEAN PATENT APPLICATION**
published in accordance with Art. 158(3) EPC

(43) Date of publication:
**14.11.2001 Bulletin 2001/46**

(21) Application number: **00970238.2**

(22) Date of filing: **31.10.2000**

(51) Int Cl.[7]: **D06M 15/53**, D06M 13/17, C08K 5/06, C08L 67/02

(86) International application number:
**PCT/JP00/07664**

(87) International publication number:
**WO 01/32975 (10.05.2001 Gazette 2001/19)**

(84) Designated Contracting States:
**AT BE CH CY DE DK ES FI FR GB GR IE IT LI LU MC NL PT SE**

(30) Priority: **04.11.1999 JP 31343199**

(71) Applicant: **TEIJIN LIMITED**
**Osaka-shi, Osaka 541-0054 (JP)**

(72) Inventors:
- **NAKAMURA, Tomoki, Teijin Limited Ibaraki-shi, Osaka 567-0006 (JP)**
- **IKEDA, Yuichiro, Teijin Limited, Osaka Res. Center Ibaraki-shi, Osaka 567-0006 (JP)**
- **SUZUKI, Togi, Teijin Limited, Osaka Res. Center Ibaraki-shi, Osaka 567-0006 (JP)**
- **MAKINO, Shoji, Teijin Limited, Matsuyama Factory Matsuyama-shi, Ehime 791-8041 (JP)**

(74) Representative: **Hallybone, Huw George et al**
**CARPMAELS AND RANSFORD**
**43 Bloomsbury Square**
**London WC1A 2RA (GB)**

# (54) POLYESTER FIBER HAVING FUNCTIONALITY IMPARTED THERETO, STRUCTURE FORMED THEREFROM AND METHOD FOR PRODUCING THE SAME

(57) A function provided polyester fiber which contains a creep promoting compound having a creep promotion coefficient (C) defined in this text of 4 or more in an amount of 0.001 to 2 wt%, structure thereof and production process therefor.

According to the present invention, there is obtained a polyester fiber having excellent durability of a provided function or structure thereof.

EP 1 154 070 A1

## Description

Detailed Description of the Invention

Field of the Invention

The present invention relates to a polyester fiber which has excellent durability of a provided function, structure thereof and production process therefor.

Prior Art

Heretofore, in order to provide such functions as antistatic properties, water absorption, stainproofness, moisture absorption, water repellency, oil repellency, pill resistance, flameproofness, flame retardancy, melt-proofing properties, bacteria resistance and deodorization to polyester fibers, there have been proposed methods for treating the fibers with various function providing agents. However, with these methods, the function providing agents are generally adhered to the surface of a fiber and therefore, easily fall off from the fiber by washing and dry cleaning, whereby there is limitation to the durability of their functions.

To solve this problem, there is also proposed a method for reducing the water solubility and solvent solubility of a fiber to improve the durability by applying a polymerizable function providing agent to the surface of a fiber to form a high molecular weight resin coating film. However, with this method, a feel of the fiber greatly hardens and the resin coating film is easily removed by physical abrasion caused by the rubbing function of washing or the like, whereby there is also limitation to the durability of the function.

Further, JP-A 59-66570 (the term "JP-A" as used herein means an "unexamined published Japanese patent application") discloses a method of improving function durability by changing the internal structure of a polyester fiber by high-speed spinning after a post-treatment with a functional providing agent. However, this method has such a defect that a usable fiber is limited.

Meanwhile, it is also known that a compound called "carrier" which swells a polyester fiber is used to improve the permeability into a polyester fiber of a dye and control the shrinkage and self-elongation of the polyester fiber (JP-A 9-31842 and JP-A 9-111654).

However, as the above carrier has a strange smell though it has an excellent effect of swelling a polyester fiber, its use is limited from the viewpoints of work environment and the disposal of waste water excluding its use for special dyes such as a composite fiber structure of a natural fiber and a polyester fiber.

In view of the above situation, a polyester fiber provided with a modification function semi-permanently while retaining a soft feel or a structure thereof has been desired. Problem to be solved by the Invention

It is an object of the present invention to provide a polyester fiber which has overcome the above defects of the prior art and has a soft feel and excellent function durability against washing, structure thereof and production process therefor.

Means for solving the Problems

The inventors of the present invention have conducted intensive studies to achieve the above object and have found that a desired polyester fiber or structure thereof can be obtained when a specific compound for swelling a polyester fiber or structure thereof to promote its creep is used before or at the same time when the polyester fiber or structure thereof is treated with a function providing agent. The present invention has been accomplished based on this finding.

That is, according to the present invention, there is provided a function provided polyester fiber which comprises 0.001 to 2 wt% of a creep promoting compound having a creep promotion coefficient (C) defined by the following equation (1) of 4 or more, or a structure thereof:

$$\text{creep promotion coefficient (C)} = \text{(elongation } L_c \text{ in creep promoting compound)/(elongation } L_a \text{ in air)} \quad (1)$$

(Lc is a value obtained by measuring elongation after a weight having a substantial weight excluding buoyancy of 50 g is attached to one end of polyethylene terephthalate partly oriented yarn having an elongation of 120 to 140 % and a fineness of 120 denier/36 filaments and the yarn is immersed in a creep promoting compound which is maintained at a fixed temperature of 30° C for 4 hours and dividing the measurement value by the length of the yarn before

immersion, and La is a value obtained by measuring elongation after a weight having a substantial weight excluding buoyancy of 50 g is attached to the same polyethylene terephthalate partly oriented yarn as above and left in the air at 30° C for 4 hours and dividing the measurement value by the length of the yarn before it is left).

According to the present invention, there is further provided a process for producing a function provided polyester fiber or structure thereof, the process comprising treating a polyester fiber with a creep promoting compound having a creep promotion coefficient (C) defined by the above equation (1) of 4 or more before or at the same time when the polyester fiber is treated with a function providing agent.

Detailed Description of the Embodiments

The above creep promoting compound in the present invention is a compound for swelling a polyester fiber properly and does not include so-called ordinary carriers. The term "carrier" as used herein means those enumerated in, for example, "22nd Edition of Dye Note" (Shikisen Co., Ltd.), "Carrier in Dyeing of Polyester Fiber" written by Satoshi Mitsuishi in "Seni Kako (fiber processing)" vol. 13, no. 10, pp. 957-964, 1961, and "Tetron Carrier Dye" (part II) written by Tooru Shimizu in "Seni Kako" vol. 11, no. 12, pp. 1188-1192, 1959.

Examples of the carrier include benzoic acid and benzoic acid derivatives such as benzoates; salicylic acid and salicylic acid derivatives such as salicylates; phenols such as phenol and m-cresol; halogenated aromatic compounds such as monochlorobenzene and trichlorobenzene; ketones such as acetophenone; phenol halides; phenylphenols such as orthophenylphenol; ethers such as anisole; di- and tri-phenylmethanes; diphenyl derivatives; naphthalenes such as methyl naphthalene and naphthol; and anilines.

The above creep promoting compound used in the present invention must have a creep promotion coefficient represented by the following equation of 4 or more.

creep promotion coefficient (C) = (elongation Lc in creep

promoting compound)/(La elongation in air)

(Lc is a value obtained by measuring elongation after a weight having a substantial weight excluding buoyancy of 50 g is attached to one end of polyethylene terephthalate partly oriented yarn having an elongation of 120 to 140 % and a fineness of 120 denier/36 filaments and the yarn is immersed in a creep promoting compound which is maintained at a fixed temperature of 30° C for 4 hours and dividing the measurement value by the length of the yarn before immersion, and La is a value obtained by measuring elongation after a weight having a substantial weight excluding buoyancy of 50 g is attached to the same polyethylene terephthalate partly oriented yarn as above and left in the air at 30° C for 4 hours and dividing the measurement value by the length of the yarn before it is left).

When the above creep promotion coefficient is smaller than 4, the effect of the present invention may not be fully provided.

In the present invention, to obtain the polyester fiber or structure thereof of interest, it is important that the above creep promoting compound should be used in conjunction with a function providing agent for the above treatment. The expression "in conjunction with" means that the function providing agent and the creep promoting compound are made co-existent before completion of the treatment of the polyester fiber (or structure thereof) with at least the function treatment agent and the order of adding the function providing agent and the creep promotion agent is not particularly limited.

For the treatment of the polyester fiber with the function providing agent, a conventionally known means per se may be employed that polyester fiber yarn or fiber structure thereof such as a fabric, knitted product or nonwoven fabric is immersed in an aqueous, water-based emulsion or organic solvent solution of the function providing agent and heated, or the function providing agent is added to a dye bath for dyeing polyester fiber yarn or fiber structure thereof such as a fabric, knitted product or nonwoven fabric. This means also includes the coating of the function providing agent using a roller such as a lubricant coating roller in the polyester fiber spinning step or stretching step, false-twisting step or the step of mixing with another fiber yarn, and the coating of the function providing agent using a roller such as a glued roller in the preparation step for weaving. Out of these, a simultaneous treatment with dyeing by adding the function providing agent and the creep promotion agent to a dye bath for dyeing is preferred because a great effect of improving durability can be obtained.

The creep promoting compound used in the present invention is preferably an alkylene oxide derivative represented by the following general formula (2) , particularly preferably an alkylene oxide having a molecular weight of 2,000 or less because the effect of the present invention is marked.

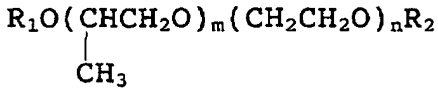

(2)

In the above formula (2), $R_1$ and $R_2$ are each independently an alkyl group having 1 to 8 carbon atoms, m is an integer of 0 to 2, and n is an integer of 2 to 10.

The polyester forming the polyester fiber in the present invention is a polyester which comprises polyethylene terephthalate, polytrimethylene terephthalate or polybutylene terephthalate as an essential ingredient and optionally a known third component copolymerized thereto. It is preferably a polyester fiber formed from a polyester comprising an ethylene terephthalate unit as the main recurring unit, particularly preferably a polyester comprising an ethylene terephthalate unit in an amount of 80 % or more of the total of all the recurring units.

The above polyester fiber is not limited by its production process and can be used in any yarn such as FOY (Fully Oriented Yarn), POY (Partially-Oriented Yarn) or USY (Ultra Speed spinning Yarn) as depending on purpose. The polyester fiber can be used in polyester composite yarn prepared by composite spinning.

The function providing agent used in the present invention is generally a compound with a functional group used to provide such a function as dyeing, antistatic properties, water absorption, stainproofness, moisture absorption, hydrophilic properties, water repellency, oil repellency, pill resistance, flameproofness, flame retardancy, melt-proofing properties, bacteria resistance or deodorization to a fiber.

Compounds for providing antistatic properties, water absorption, stainproofness and hydrophilic properties include polyester polyether block copolymers, polyoxyethylene glycol diacrylates, methoxypolyethylene glycol acrylates and methacrylates, and N-methylol acrylic acid amides. The polyester polyether block copolymers are preferably terephthalic acid-alkylene glycol-polyalkylene glycol, terephthalic acid-alkylene glycol-polyalkylene glycol, terephthalic acid-alkylene glycol-polyalkylene glycol monoether and terephthalic acid-isophthalic acid-alkylene glycol-polyalkylene glycol monoether block copolymers. They may have an anion at one terminal or both terminals. The alkylene glycol used for the production of the above block copolymers is preferably ethylene glycol, propylene glycol, tetramethylene glycol or pentamethylene glycol. The polyalkylene glycol is polyethylene glycol having an average molecular weight of 400 to 12,000, preferably 600 to 6,000, polyethylene glycol·polypropylene glycol copolymer or polypropylene glycol. Further, the monoether of polyalkylene glycol is a monomethyl ether such as polyethylene glycol or polypropylene glycol, monoethyl ether or monophenyl ether. The polyester modifier having an anion at one terminal or both terminals of the block copolymer is what is anionized by a carboxyl group or anionized by a sulfonate.

Compounds for providing water repellence and oil repellence include aluminum soap, butyl acetoacetate/butyl titanate complex compounds, chromic chloride stearate, stearoyl methyl amide methylene pyridinium salts, organic fluorine compounds such as fluoride alkyl polyacrylates, and silicone compounds such as methyl hydrogen or polysiloxane.

Compounds for providing flameproofness and flame retardancy include phosphorus-containing compounds, halogen compounds and thiourea formalin reaction products. Examples of these compounds include trisdibromopropylphosphate, tetrakis hydroxymethylphosphonium chloride and phosphate compounds represented by the following chemical formula.

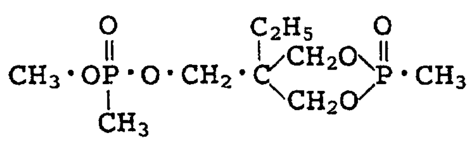

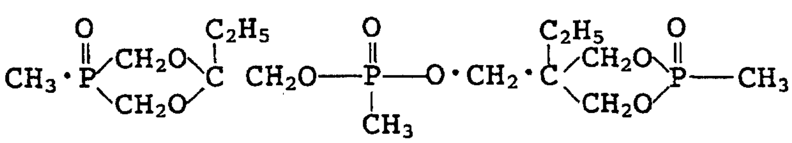

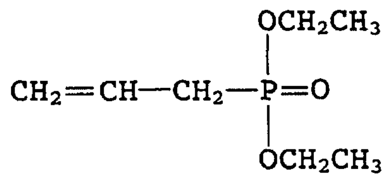

Compounds for providing bacteria resistance and deodorization include quaternary ammonium compounds, organic mercury compounds, phenols and chlorides thereof, and metal salts of organic acids such as naphthenic acid, as exemplified by N-fluorodichloromethylthiophthalimide, N-dimethyl-N'-phenyl-N'-(fluorodichloromethylthio) sulfamide, 2-(4-thiazoyl)benzimidazole, 2-chloro-2-(2,4-dichlorophenoxy)phenol, chlorohexylin and the like.

Known dyes which can dye polyesters can be used as the dye for dyeing. Out of these, disperse dyes are preferred. The disperse dyes are dyes used to dye hydrophobic fibers in a system hardly soluble in water and dispersed in water, as exemplified by benzene azo-based (such as monoazo and disazo), heterocyclic azo-based (such as thiazole azo, benzothiazole azo, quinoline azo, pyridine azo, imidazole azo and thiophenone azo), anthraquinone-based, condensate-based (such as quinophthaline, styryl and coumarin) dyes. Disperse dyes classified as Disperse Yellow, Disperse Orange, Disperse Red, Disperse Violet, Disperse Blue, Disperse Green and Disperse Brown according to the classification of C.I. Name are preferred.

The molecular weight of the compound used as a function providing agent is desirably 2,500 or less. When the molecular weight is larger than 2,500, absorption into the interior of a fiber may become small and the effect of providing a function may become small. Meanwhile, even a low molecular compound having a molecular weight of 50 to 200 provides the effect of the present invention.

The content of the above function providing agent in the fiber is preferably 0.01 to 15 wt%, more preferably 0.5 to 10 wt%. When the content is smaller than 0.01 wt%, the effect of providing a function may be small according to a compound and washing durability may deteriorate. When the content of the function providing agent on the surface is larger than 15 wt%. a feel change may become large.

Although the function and mechanism that the creep promoting compound improves the durability of the function providing agent in the present invention are not made clear yet, it is assumed that they have close connection with a change in the interior fine structure of the polyester fiber. That is, the polyester fiber is properly swollen by the creep promoting compound having a creep promotion coefficient of 4 or more and the free volume of a noncrystalline area becomes large. As a result, it is presumed that the function providing agent slightly penetrates the interior of a polyester from the surface and improves durability.

The content of the creep promoting compound having a creep promotion coefficient of 4 or more in the polyester fiber obtained by the process of the present invention is preferably 0.001 to 2 wt%, more preferably 0.01 to 0.5 wt%. The content can be analyzed by NMR (Nuclear Magnetic Resonance of the JEOL A-600 (600 MHz) of JEOL Corporation). As for the analytical method, 50 mg of the fabric is dissolved in 0.6 ml of a mixed solvent of heavy trifluoroacetic acid/heavy chloroform (1/1) and 600M-proton NMR is used to measure the content of the creep promoting compound. In order to contain the creep promoting compound having a creep promotion coefficient of 4 or more in an amount of 0.001 to 2 wt%, it is preferred that the creep promoting compound should be contained in a treating solution in an amount of 0.01 to 10 wt% based on the fabric though it changes according to the type of the creep promoting compound and bath ratio at the time of treatment.

Examples

The following examples are given to further illustrate the present invention. Physical properties in the examples were measured by the following methods.

(1) creep promotion coefficient

(i) preparation of polyethylene terephthalate partly oriented yarn

Polyethylene terephthalate having an intrinsic viscosity [η] of 0 . 64 and containing 0.3 wt% of titanium oxide fine particles was extruded from a nozzle having 36 circular discharge ports with a diameter of 0.3 mm and a land length of 0.6 mm at a nozzle temperature of 280° C and a rate of 44 g/min and then wound at a rate of 3,300 m/min. Thus, polyethylene terephthalate partly oriented yarn having a fineness of 120 denier/36 filaments, an elongation of 130 % and an intrinsic viscosity [η] of 0.62 was obtained.

(ii) measurement of creep promotion coefficient (C)

After a weight having a substantial weight excluding buoyancy of 50 g is attached to one end of the obtained

polyethylene terephthalate partly oriented yarn and the yarn is immersed in the creep promoting compound which is maintained at a fixed temperature of 30° C for 4 hours, the elongation of the yarn based on the length before immersion is calculated and taken as Lc (%).

After a weight having a substantial weight excluding buoyancy of 50 g is attached to one end of the same polyethylene terephthalate partly oriented yarn as described above and the yarn is left in the air at 30° C for 4 hours, the elongation of the yarn based on the length before left is calculated and taken as La (%). The creep promotion coefficient is calculated from the following equation.

creep promotion coefficient (C) = (elongation Lc in creep

promoting compound)/(elongation La in air)

(2) electrostatic propensity

This is measured in accordance with the JIS L1094 method (5.2).

(3) hydrophilic property

0.5 cc of distilled water is dropped onto a fabric laid horizontally from a height of 5 cm to measure the time until water is absorbed into the fabric.

(4) stainproofness

A fabric is immersed in artificial oil stains consisting of 0.62 g of carbon black (#100 of Mitsubishi Kasei Corporation), 12.68 g of B heavy oil and 1986.70 g of motor oil (Dia Clean Motor Oil M-2), squeezed with a mangle and dried by heating at 80°C for 4 hours, a load fabric is added to adjust the total weight to 1 kg, these fabrics were washed in a solution of 20 g of "Attack", a domestic detergent dissolved in 30 liters of water at 25° C for 10 minutes, and stainproofness is obtained from a difference in the color of the fabric before and after washing as ΔE.

$$\text{(equation 4) } \Delta E = (\Delta L^2 + \Delta a^2 + \Delta b^2)^{1/2}$$

(5) washing durability

Washing is carried out 10 times in accordance with the JIS L0217 method.

(6) measurement of content of creep promoting compound in polyester fiber

50 mg of a fabric is dissolved in 0.6 ml of a mixed solvent of heavy trifluoroacetic acid and heavy chloroform (1/1) and the content of the creep promoting compound in the polyester fiber is measured by NMR (Nuclear Magnetic Resonance) (JEOL A-600 (600 MHz) (to be referred to as "NMR" hereinafter) of JEOL Corporation).

Example 1

Semi-dull FOY having a fineness of 50 denier/24 filament as a warp and semi-dull FOY having a fineness of 75 denier/36 filament as a weft were used to weave a taffeta having a weight of 55 g/$m^2$. These FOYs were composed of polyethylene terephthalate fibers.

This fabric was treated with a treating solution comprising polyethylene glycol dimethyl ether (molecular weight of 266, creep promotion coefficient of 5.2) as a creep promoting compound and a one-terminal capped polyethylene glycol/polyethylene terephthalate/polyethylene isophthalate block copolymer (molecular weight of 10,000, SR-1000 of Takamatsu Yushi Co., Ltd.) as a hydrophilic property providing agent.

The treatment was carried out using a miniature color dyeing machine as follows. 5 g of the fabric was immersed in 200 g of an aqueous treating solution comprising 0.15 g (3 %owf) of polyethylene glycol dimethyl ether and 0.025 g (0.5 %owf) of the one-terminal capped polyethylene glycol/polyethylene terephthalate/polyethylene isophthalate block copolymer, heated at 130° C for 30 minutes, reduction washed in water heated at 80°C and containing 2 g/l of sodium carbonate, 2 g/l of hydrosulfide sodium and 2 g/l of Score Roll (??) (Number 400 of Kao Corporation) for 15 minutes, rinsed in hot water, dried at 120° C for 5 minutes and heat set at 180° C for 1 minute. 50 mg of this fabric was dissolved in 0.6 ml of a mixed solvent of heavy trifluoroacetic acid and heavy chloroform (1/1) and measured by NMR (Nuclear Magnetic Resonance, JEOL A-600 (600 MHz) of JEOL Corporation). A peak (1) attributed to PET and peaks (2) and (3) attributed to polyethylene glycol dimethyl ether were obtained. When the peaks (1), (2) and (3) were used to calculate the content of polyethylene glycol dimethyl ether from the following equation, it was 0.1 wt%.

content of polyethylene glycol dimethyl ether (wt%) = 100

x A/(A + B)

wherein

A = (integral value of peak (2) + integral value of peak (3)/(number of hydrogen atoms of polyethylene glycol dimethyl ether) x (molecular weight of polyethylene glycol dimethyl ether)

B = ((integral value of peak (1)/4) x (molecular weight of PET)

When the electrostatic propensity and washing durability of electrostatic propensity of this fabric were measured, they were satisfactory at 500 V and 600 V, respectively. The obtained results are shown in Table 1.

Example 2

The procedure of Example 1 was repeated except that the amount of polyethylene glycol dimethyl ether in the used treating solution was changed to 0.05 g. When the content of polyethylene glycol dimethyl ether was measured in the same manner as in Example 1, it was 0.05 wt%. When the electrostatic propensity and washing durability of electrostatic propensity of this fabric were measured, they were satisfactory at 450 V and 620 V, respectively. The obtained results are shown in Table 1.

Example 3

The procedure of Example 1 was repeated except that polyethylene glycol methyl ethyl ether (molecular weight of 280, creep promotion coefficient of 5.0) was used in place of polyethylene glycol dimethyl ether. When the content of polyethylene glycol dimethyl ethyl ether was measured in the same manner as in Example 1, it was 0.08 wt%. When the electrostatic propensity and washing durability of electrostatic propensity of this fabric were measured, they were satisfactory at 470 V and 650 V, respectively. The obtained results are shown in Table 1.

Comparative Example 1

The procedure of Example 1 was repeated except that polyethylene glycol dimethyl ether was not used. This fabric did not contain a creep promoting compound. When the electrostatic propensity and washing durability of electrostatic propensity of this fabric were measured, they were 500 V and 2,500 V, respectively. Thus, this fabric was inferior in washing durability. The obtained results are shown in Table 1.

Comparative Example 2

The procedure of Example 1 was repeated except that the amount of polyethylene glycol dimethyl ether in the used treating solution was changed to 5 g. When the content of polyethylene glycol dimethyl ether was measured in the same manner as in Example 1, it was 3 wt%. This fabric shrank and had a hard feel.

Comparative Example 3

The procedure of Example 1 was repeated except that 1 g of polyethylene glycol monomethyl ether (molecular weight of 500, creep promotion coefficient of 2.5) was used in place of polyethylene glycol dimethyl ether. When the content of polyethylene glycol dimethyl ether was measured in the same manner as in Example 1, it was 0.1 wt%. When the electrostatic propensity and washing durability of electrostatic propensity of this fabric were measured, they were 510 V and 2,500 V, respectively. Thus, this fabric was inferior in washing durability. The obtained results are

shown in Table 1.

Comparative Example 4

The procedure of Example 1 was repeated except that the one terminal capped polyethylene glycol/polyethylene terephthalate/polyethylene isophthalate block copolymer (molecular weight of 10,000, SR-1000 of Takamatsu Yushi Co., Ltd.) as a hydrophilic property providing agent was not used. When the content of polyethylene glycol dimethyl ether was measured in the same manner as in Example 1, it was 0.1 wt%. When the electrostatic propensity and washing durability of electrostatic propensity of this fabric were measured, they were unsatisfactory at 4,000 V and 3,900 V, respectively. The obtained results are shown in Table 1.

Table 1

| | creep promotion coefficient | content of creep promoting compound (wt%) | electrostatic propensity (V) | | hydrophilic property (s) | | stainproofness ΔE | |
|---|---|---|---|---|---|---|---|---|
| | | | before washing | after 10 times of washing | before washing | after 10 times of washing | before washing | after 10 times of washing |
| Ex.1 | 5.2 | 0.1 | 500 | 600 | ≦1 | 1 | 5 | 8 |
| Ex.2 | 5.2 | 0.05 | 450 | 620 | ≦1 | 1 | 5 | 8 |
| Ex.3 | 5 | 0.08 | 470 | 650 | ≦1 | 1 | 5 | 8 |
| C.Ex.1 | - | 0 | 500 | 2500 | ≦1 | 30 | 5 | 20 |
| C.Ex.2 | 5.2 | 3 | bad feel | | | | | |
| C.Ex.3 | 2.5 | 0.1 | 510 | 2500 | ≦1 | 30 | 5 | 20 |
| C.Ex.4 | 5.2 | 0.1 | 4000 | 3900 | 180 | 180 | 25 | 25 |

Ex.: Example C. Ex.: Comparative Example

Examples 1, 2 and 3 are satisfactory in terms of electrostatic propensity and feel even after 10 times of washing while Comparative Examples 1, 3 and 4 are inferior in durability and Comparative Example 2 is poor in feel. According to the present invention, it is understood that a polyester fiber having excellent durability of functions against washing without impairing its feel can be obtained.

## Claims

**1.** A function provided polyester fiber which comprises 0.001 to 2 wt% of a creep promoting compound having a creep promotion coefficient (C) defined by the following equation (1) of 4 or more, or a structure thereof:

creep promotion coefficient (C) = (elongation Lc in creep promoting compound)/(elongation La in air) (1)

wherein Lc is a value obtained by measuring elongation after a weight having a substantial weight excluding buoyancy of 50 g is attached to one end of polyethylene terephthalate partly oriented yarn having an elongation of 120 to 140 % and a fineness of 120 denier/36 filaments and the yarn is immersed in a creep promoting compound which is maintained at a fixed temperature of 30° C for 4 hours and dividing the measurement value by the length of the yarn before immersion, and La is a value obtained by measuring elongation after a weight having a substantial weight excluding buoyancy of 50 g is attached to the same polyethylene terephthalate partly oriented yarn as above and left in the air at 30° C for 4 hours and dividing the measurement value by the length of the yarn before it is left.

**2.** The function provided polyester fiber or structure thereof according to claim 1, wherein the creep promoting compound is an alkylene oxide derivative represented by the following formula (2):

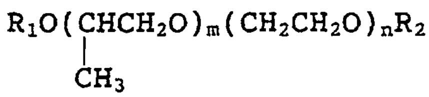

(2)

wherein $R_1$ and $R_2$ are each independently an alkyl group having 1 to 8 carbon atoms, m is an integer of 0 to 2, and n is an integer of 2 to 10.

**3.** The function provided polyester fiber or structure thereof according to claim 1, wherein the polyester fiber contains the creep promoting compound in an amount of 0.01 to 0.5 wt%.

**4.** The function provided polyester fiber or structure thereof according to claim 1, wherein the function provided polyester fiber is provided with at least one function selected from the group consisting of coloring, antistatic properties, water absorption, stainproofness, moisture absorption and flame retardancy.

**5.** The function provided polyester fiber or structure thereof according to claim 1, wherein the polyester fiber is formed from a polyester which comprises an ethylene terephthalate unit as the main recurring unit.

**6.** A process for producing a function provided polyester fiber or structure thereof, the process comprising treating a polyester fiber with a creep promoting compound having a creep promotion coefficient (C) defined by the following equation (1) of 4 or more before or at the same time when the polyester fiber is treated with a function providing agent:

creep promotion coefficient (C) = (elongation Lc in creep promoting compound)/(elongation La in the air)

wherein Lc is a value obtained by measuring elongation after a weight having a substantial weight excluding buoyancy of 50 g is attached to one end of polyethylene terephthalate partly oriented yarn having an elongation of 120

to 140 % and a fineness of 120 denier/36 filaments and the yarn is immersed in a creep promoting compound which is maintained at a fixed temperature of 30° C for 4 hours and dividing the measurement value by the length of the yarn before immersion, and La is a value obtained by measuring elongation after a weight having a substantial weight excluding buoyancy of 50 g is attached to the same polyethylene terephthalate partly oriented yarn as above and left in the air at 30° C for 4 hours and dividing the measurement value by the length of the yarn before it is left.

**7.** The process for producing a function provided polyester fiber or structure thereof according to claim 6, wherein the creep promoting compound is an alkylene oxide derivative represented by the following formula (2):

$$R_1O(\underset{\displaystyle CH_3}{\underset{|}{C}}HCH_2O)_m(CH_2CH_2O)_nR_2 \qquad (2)$$

wherein $R_1$ and $R_2$ are each independently an alkyl group having 1 to 8 carbon atoms, m is an integer of 0 to 2, and n is an integer of 2 to 10.

**8.** The process for producing a function provided polyester fiber or structure thereof according to claim 6, wherein the function providing agent is at least one selected from the group consisting of a dye, antistatic agent, water absorbent, stainproofing agent, moisture absorbing agent and flame retardant.

**9.** The process for producing a function provided polyester fiber or structure thereof according to claim 6, wherein the polyester fiber is formed from a polyester which comprises an ethylene terephthalate unit as the main recurring unit.

# INTERNATIONAL SEARCH REPORT

International application No.
PCT/JP00/07664

A. CLASSIFICATION OF SUBJECT MATTER
Int.Cl$^7$ D06M15/53, D06M13/17, C08K5/06, C08L67/02

According to International Patent Classification (IPC) or to both national classification and IPC

B. FIELDS SEARCHED

Minimum documentation searched (classification system followed by classification symbols)
Int.Cl$^7$ D06M15/53, D06M13/17

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 61-225331, A (Shoko Kagaku Kenkyusho K.K.), 07 October, 1986 (07.10.86) (Family: none) | 1-9 |
| X | JP, 7-216733, A (Sanyo Chemical Industries, Ltd.), 15 August, 1995 (15.08.95) (Family: none) | 1-3, 5-7,9 |
| X | JP, 8-260347, A (Toray Industries, Inc.), 08 October, 1996 (08.10.96), Par. No. [0016], (Family: none) | 1-3, 5-7,9 |
| X | JP, 10-292263, A (Toray Industries, Inc.), 04 November, 1998 (04.11.98), Par. No. [0014], (Family: none) | 1-3, 5-7,9 |
| X | JP, 58-36269, A (TOKAI SEIYU KOGYO K.K.), 03 March, 1983 (03.03.83) (Family: none) | 1,3,5,6,9 |
| X | JP, 52-8440, B (Toyobo Co., Ltd.), 09 March, 1977 (09.03.77) (Family: none) | 1,3,5,6,9 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 January, 2001 (05.01.01) | 16 January, 2001 (16.01.01) |
| Name and mailing address of the ISA/ Japanese Patent Office | Authorized officer |
| Facsimile No. | Telephone No. |

Form PCT/ISA/210 (second sheet) (July 1992)